# EUROPÄISCHE PATENTSCHRIFT

(11) **EP 0 615 813 B1**
(45) Veröffentlichungstag und Bekanntmachung des Hinweises auf die Patenterteilung: **12.06.1996**
(21) Anmeldenummer: 94101433.4
(22) Anmeldetag: 01.02.1994
(51) Int. Cl.: B23Q 39/04

(54) **Montagestation**
Assembling station
Station d'assemblage

(30) Priorität: 12.02.1993 DE 4304115
(43) Veröffentlichungstag der Anmeldung: 21.09.1994
(73) Patentinhaber: Bühler, Hans H., D-71384 Weinstadt (DE); Roth, Axel, D-71384 Weinstadt (DE)
(72) Erfinder: Bühler, Hans H., D-71384 Weinstadt (DE); Roth, Axel, D-71384 Weinstadt (DE)
(74) Vertreter: Dipl.-Phys.Dr. Manitz Dipl.-Ing. Finsterwald Dipl.-Ing. Grämkow Dipl.-Chem Dr. Heyn Dipl.Phys. Rotermund Morgan, B.Sc.(Phys)

(56) Entgegenhaltungen:
- EP-A- 0 100 307
- CH-A- 381 052
- DE-A- 1 903 173
- DE-A- 2 033 722
- FR-A- 2 448 961
- GB-A- 790 218

## Beschreibung

Die Erfindung betrifft eine Montagestation mit einem stationären Maschinengestell, einer darauf angeordneten, vorzugsweise als Drehteller ausgebildeten Werkstückaufnahme, mehreren am Maschinengestell ringförmig zur Werkstückaufnahme anbringbaren Manipulationseinheiten zur Werkstückbearbeitung und einem die Manipulationseinheiten treibenden Zentralantrieb, welcher als mehrfach geknickter, eine Vertikalachse der Werkstückaufnahme bogenförmig umschließender, im bzw. am Maschinengestell angeordneter Wellenzug ausgebildet ist und auf seinen Wellenteilen Getriebeelemente zum Antrieb der den Wellenteilen zugeordneten Manipulationseinheiten trägt.

Bei einer aus der GB 790 218 bekannten derartigen Montagestation ist der Wellenzug in Draufsicht U-förmig ausgebildet und besteht aus drei rechtwinklig zueinander angeordneten Wellenstücken, die miteinander durch Kegelzahnräder antriebsmäßig verbunden sind und nahe den Kegelzahnrädern angeordnete Lager besitzen. Diese Konstruktion ist unerwünscht aufwendig, weil eine sehr exakte Justage der Kegelzahnräder relativ zueinander notwendig ist, um hinreichende Spielfreiheit zu gewährleisten. Dementsprechend ist auch ein Austausch der auf den Wellenteilen anzuordnenden Getriebeelemente bei einer eventuellen Umrüstung der Montagestation schwierig. Zwar lassen sich die Wellenteile bei einer derartigen Umrüstung demontieren, jedoch müssen dabei die Wellenteile jeweils komplett mit ihren Kegelzahnrädern und ihren Lageranordnungen ausgebaut und bei der nachfolgenden Montage erneut aufwendig justiert werden.

Außerdem werden auf dem Markt Montagestationen angeboten, bei denen als Zentralantrieb ein koaxial zur Vertikalachse eines als Werkstückaufnahme vorgesehenen Drehtellers angeordnetes Kegelzahnrad vorgesehen ist, welches eine Vielzahl von Kegelzahnritzeln antreibt, die jeweils auf einer zur Achse des Kegelzahnrades radialen Eingangswelle eines zum Antrieb eines der Manipulatoreinheiten dienenden Getriebe angeordnet sind. Die zugehörigen Getriebegehäuse lassen sich seitlich am Maschinengestell an entsprechenden, vielfach angeordneten Flanschflächen anbringen und dienen gleichzeitig als Träger der Manipulatoreinheiten. Auch diese Bauweise ist vergleichsweise aufwendig.

Deshalb ist es Aufgabe der Erfindung, eine Montagestation zu schaffen, welche bei einfacher Konstruktion eine einfache Umrüstung ermöglicht.

Diese Aufgabe wird bei einer Montagestation der eingangs angegebenen Art dadurch gelöst, daß der Wellenzug als an ihren Gelenken zwischengelagerte Gelenkwelle ausgebildet ist, deren Wellenteile an ihren Enden mit Anschlußteilen versehen sind und mit den Gelenken lösbar verbunden und damit zwischen den Zwischenlagern separat demontierbar sind.

Erfindungsgemäß ist der Wellenzug als eine an ihren Gelenken zwischengelagerte Gelenkwelle ausgebildet, welche jeweils zwischen den Zwischenlagern auftrennbar ist, derart, daß die Wellenteile zwischen den Zwischenlagern jederzeit separat ausgebaut und für geänderte Getriebeelemente umgerüstet werden können.

Die Erfindung bietet den Vorteil, daß keinerlei nennenswerter Justageaufwand notwendig wird, da bei Verwendung entsprechender Gelenke ohne weitere Maßnahmen hinreichende Spielfreiheit des Wellenzuges gewährleistet ist.

Zweckmäßigerweise besitzt das Maschinengestell noch weitere vorbereitete Lager bzw. Befestigungspunkte für zusätzliche, parallel zu den Wellenabschnitten montierbare Achsen, beispielsweise zur Lagerung von Kipphebeln u.dgl.

Zur Anordnung der Manipulatoreinheiten besitzt das Maschinengestell bevorzugt eine seine Oberseite bildende tischartige Plattform, welche den Wellenzug - in Draufsicht gesehen - überragt, so daß sich die Manipulatoreinheiten vertikal oberhalb der Wellenabschnitte montieren lassen. Zur Durchführung von Antriebselementen zur Antriebsverbindung zwischen Manipulatoreinheit und Wellenzug können in der Plattform entsprechende Durchbrüche vorgesehen sein.

Im übrigen gehen bevorzugte Merkmale der Erfindung aus den Ansprüchen sowie der nachfolgenden Erläuterungen einer bevorzugten Ausführungsform hervor, die anhand der Zeichnungen dargestellt wird.

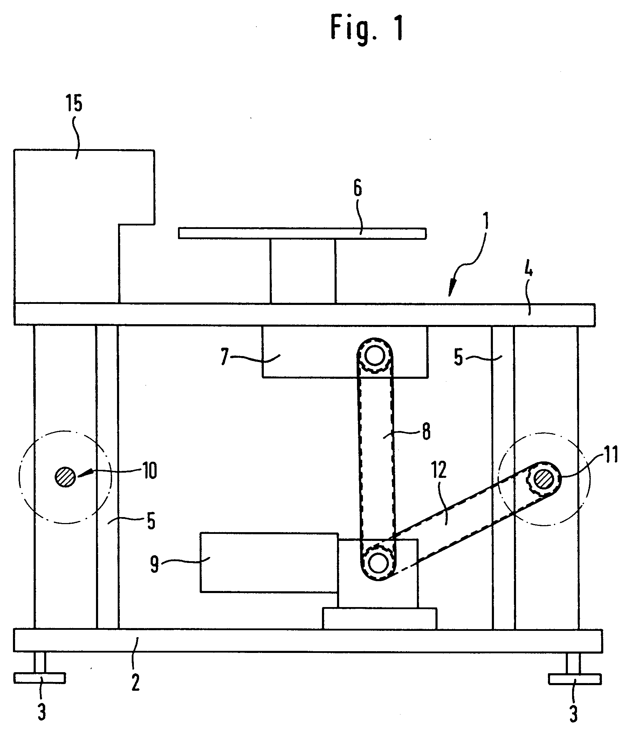

Dabei zeigt
- Fig. 1: eine schematisierte Seitenansicht einer erfindungsgemäßen Montagestation,

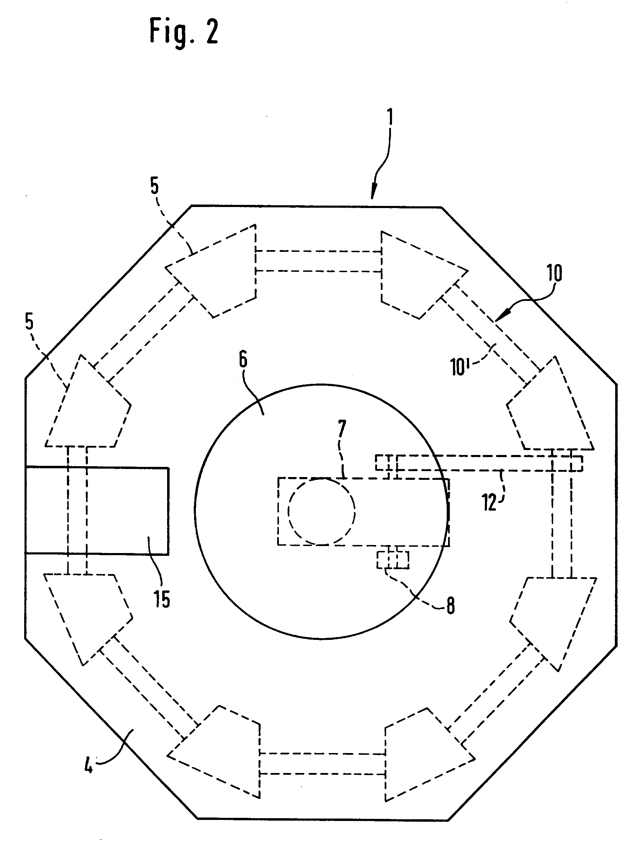

- Fig. 2: eine Draufsicht auf die Montagestation und

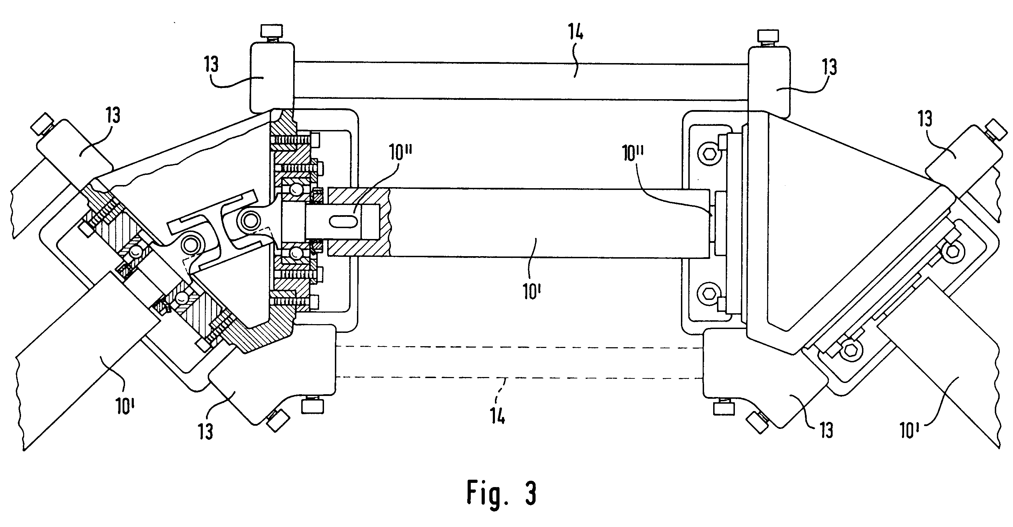

- Fig. 3: eine ausschnittsweise Draufsicht auf den Wellenzug.

Die erfindungsgemäße Montagestation besitzt ein gußeisernes Maschinengestell 1, welches im wesentlichen aus einer massiven Basisplatte 2, die auf höheneinstellbaren Füßen 3 gelagert ist, und einer massiven Tischplatte 4 besteht, welche mit der Basisplatte 2 über stabile säulenartige Pfosten 5 verbunden ist.

Die Tischplatte 4 besitzt die Form eines regelmäßigen Vieleckes, beispielsweise eines Achtecks.

Oberhalb der Tischplatte 4 ist ein als Werkstückaufnahme dienender Drehteller 6 angeordnet, welcher sich um seine Vertikalachse schrittweise drehen läßt.

Der Antrieb des Drehtellers 6 erfolgt über ein unter der Tischplatte 4 angeordnete Schrittschaltgetriebe 7, welches über einen Zahnriemen 8 antriebsmäßig mit einem auf der Basisplatte 2 angeordneten Motor, beispielsweise einem Elektromotor 9, verbunden ist.

Unterhalb der Tischplatte 4 ist ein ringförmig geschlossener Wellenzug 10 angeordnet, welcher bevorzugt aus einer an ihren Gelenken am Maschinengestell 1, beispielsweise an dessen Pfosten 5, zwischengelagerten Gelenkwelle besteht. Die Wellenteile 10' des Wellenzuges 10 sind separat demontierbar, d.h. jedes Wellenteil 10' ist an seinen Enden mit Anschlußteilen 10'' lösbar verbunden.

Die Wellenteile 10' dienen zur Aufnahme nicht dargestellter Getriebeelemente, wie z.B. Kurvenscheiben u.dgl., welche sich aufgrund der Demontierbarkeit der Wellenteile 10' leicht anordnen bzw. austauschen lassen.

Eines der Wellenteile 10' trägt ein Zahnrad 11 für einen Zahnriemen 12, über den der Wellenzug 10 mit dem Motor 9 antriebsmäßig verbunden ist.

Am Maschinengestell 1 sind des weiteren Lager 13 zur auswechselbaren Aufnahme von Achsen 14 angeordnet, welche sich jeweils parallel zu einem der Wellenteile 10' des Wellenzuges 10 anbringen lassen und zur Lagerung von Getriebeelementen, wie z.B. Kipphebeln od.dgl. dienen, die mit Getriebeelementen, z.B. den Kurvenscheiben, auf den Wellenteilen 10' zusammenwirken.

Diese Getriebeelemente können zum Antrieb von nicht dargestellten Stößeln oder Schubstangen oder sonstigen Getriebeteilen dienen, über die auf der Tischplatte 4 ringförmig zur Achse des Drehtellers 6 montierbare Manipulatoreinheiten 15 antreibbar sind. Dabei durchsetzen die Stößel, Schubstangen oder sonstigen Getriebeteile gegebenenfalls in der Tischplatte 4 angeordnete Öffnungen (nicht dargestellt).

Die Manipulatoreinheiten 15 dienen als Träger- und Betätigungsorgan von Montagewerkzeugen, wie z.B. Greifzangen, Tastern, Schraubspindeln und Stempeln od.dgl. zur Werkstückbearbeitung.

Hierbei ist vorteilhaft, daß die Manipulationseinheiten 15 auf der Tischplatte 4 einerseits vertikal oberhalb eines der Wellenteile 10' und andererseits auch in davon abweichenden Positionen angeordnet werden können, beispielsweise oberhalb der Gelenke bzw. Knicke des Wellenzuges 10.

Darüber hinaus besteht grundsätzlich auch die Möglichkeit, daß über ein Wellenteil 10' mehr als eine Manipulatoreinheit 15 angetrieben wird.

## Patentansprüche

1. Montagestation mit
- einem stationären Maschinengestell,
- einer darauf angeordneten, vorzugsweise als Drehteller ausgebildeten Werkstückaufnahme,
- mehreren am Maschinengestell ringförmig zur Werkstückaufnahme anbringbaren Manipulationseinheiten zur Werkstückbearbeitung und
- einem die Manipulationseinheiten treibenden Zentralantrieb, welcher als mehrfach geknickter, eine Vertikalachse der Werkstückaufnahme bogenförmig umschließender, im bzw. am Maschinengestell angeordneter Wellenzug ausgebildet ist und auf seinen Wellenteilen Getriebeelemente zum Antrieb der den Wellenteilen zugeordneten Manipulationseinheiten trägt,
dadurch gekennzeichnet,
daß der Wellenzug (10) als an ihren Gelenken zwischengelagerte Gelenkwelle ausgebildet ist, deren Wellenteile (10') an ihren Enden mit Anschlußteilen (10'') versehen sind und mit den Gelenken lösbar verbunden und damit zwischen den Zwischenlagern (13) separat demontierbar sind.

2. Montagestation nach Anspruch 1,
dadurch gekennzeichnet,
daß am Maschinengestell (1) parallel zu den Wellenteilen (10') der Gelenkwelle separat anbringbare sowie demontierbare Lagerachsen (14) für Getriebeelemente anbringbar sind.

3. Montagestation nach einem der Ansprüche 1 und 2,
dadurch gekennzeichnet,
daß das Maschinengestell (1) eine Tischplatte (4) zur Anordnung der Manipulationseinheiten (15) aufweist.

4. Montagestation nach einem der Ansprüche 1 bis 3,
dadurch gekennzeichnet,
daß der Wellenzug (10) ringförmig geschlossen ist.

## Claims

1. Assembly station with
- a stationary machine framework,
- a workpiece mount arranged thereon and preferably executed as a rotary plate,
- a plurality of manipulation units mountable on the machine framework in ring-formation relative to the workpiece mount for processing the workpiece and
- a central drive driving the manipulation units which is executed as a multiply angled shaft train arranged in the or at the machine framework and surrounding a vertical axis of the workpiece mount in arch form and carries transmission elements on its shaft parts for driving the manipulation units associated with the shaft parts
characterised in that
the shaft train (10) is executed as a jointed shaft intermediately suspended at its joints, with the shaft parts (10') of the jointed shaft being provided at their ends with connection parts (10'') and being releasably connected to the joints and thus separately dismantleable between the intermediate bearings (13).

2. Assembly station in accordance with claim 1
characterised in that
separately attachable as well as removable support axles (14) for transmission elements are attachable at the machine framework (1) parallel to the shaft parts (10') of the jointed shaft.

3. Assembly station in accordance with one of the claims 1 and 2
characterised in that
the machine framework (1) has a table plate (4) for the mounting of the manipulation units (15).

4. Assembly station in accordance with one of the claims 1 to 3
characterised in that
the shaft train (10) is closed in ring-like manner.

## Revendications

1. Poste de montage comportant - un bâti fixe de machine,
• un logement pour pièces à traiter, disposé sur ce bâti et agencé de préférence sous la forme d'un plateau rotatif,
• plusieurs unités de manipulation pour le traitement de pièces à traiter, unités qui peuvent être disposées sur le bâti de machine selon une disposition annulaire autour du logement pour pièces à traiter,
• un dispositif central d'entraînement, qui entraîne les unités de manipulation et qui est agencé sous la forme d'un train d'arbres coudé de façon multiple, entoure selon une disposition en arc de cercle l'axe vertical du logement pour pièces à traiter et est disposé dans ou sur le bâti de machine, et qui porte, sur ses parties d'arbre, des éléments de transmission pour entraîner les unités de manipulation associées aux parties d'arbre,
caractérisé en ce que le train d'arbres (10) est agencé sous la forme d'un arbre articulé, supporté de façon intermédiaire au niveau de ses articulations et dont les parties (10') comportent des éléments de raccordement (10'') au niveau de leurs extrémités et sont reliées de façon amovible aux articulations et peuvent par conséquent être démontées séparément entre les supports intermédiaires (13).

2. Poste de montage selon la revendication 1, caractérisé en ce que des axes de palier (14), pouvant être montés et démontés séparément, pour des éléments de transmission peuvent être montés sur le bâti de machine (1) parallèlement aux parties (10') de l'arbre articulé.

3. Poste de montage selon l'une des revendications 1 et 2, caractérisé en ce que le bâti de machine (1) possède un plateau de table (4) pour la mise en place des unités de manipulation (4).

4. Poste de montage selon l'une des revendications 1 à 3, caractérisé en ce que le train d'arbres (10) est fermé selon une disposition annulaire.
